Europäisches Patentamt

European Patent Office

Office européen des brevets

(19)

(11) Publication number: **0 123 353**

**A1**

(12) # EUROPEAN PATENT APPLICATION

(21) Application number: **84200528.2**

(22) Date of filing: **12.04.84**

(51) Int. Cl.³: **A 22 B 5/08**

(30) Priority: **15.04.83 NL 8301316**

(43) Date of publication of application:
**31.10.84 Bulletin 84/44**

(84) Designated Contracting States:
**AT BE CH DE FR GB IT LI LU NL SE**

(71) Applicant: **MACHINEFABRIEK G.J. NIJHUIS B.V.**
**Parallelweg 4**
**NL-7102 DE Winterswijk(NL)**

(72) Inventor: **Nijhuis, Gerrit Jan**
**Rusthuisstraat 10**
**NL-7107 JH Winterswijk(NL)**

(74) Representative: **van der Beek, George Frans et al,**
**Nederlandsch Octrooibureau Johan de Wittlaan 15 P.O.**
**Box 29720**
**NL-2502 LS The Haque(NL)**

(54) **Device for removing hairs from slaughtered animals, in particular hogs.**

(57) The invention relates to a singeing device for removing hairs of slaughtered hogs by means of singeing burners (9, 10, 20, 21, 22, 34, 35, 45, 46, 47), which have a half circular shape (9, 10) or frame front (23) to surround the carcass (1), move with the same speed as the carcasses (1) and simultaneously upwardly or downwardly and back driving the return stroke of the burners, said burners being movable on columns (7, 27, 28, 37, 40), which are mounted to perform a straight line movement parallel to the conveyor (3) of the carcasses or a swinging movement about an axis perpendicular to the direction of movement of the carcasses.

fig-4

EP 0 123 353 A1

Croydon Printing Company Ltd.

Device for removing hairs from slaughtered animals, in particular hogs.

The invention is related to a device for removing hairs of slaughtered animals, in particular hogs, with the aid of singeing means, said device comprising a conveyer for continuously moving along a path the slaughtered animals that hang on the hind-legs spaced from each other, means that in the direction of movement of the slaughtered animals can move with the same speed as the conveyer device along a certain distance in conveying direction and back respectively and burners connected to these means, which burners during movement of said first-mentioned means move in the conveying direction in a vertical position along each slaughtered animal in the length direction of it and during the reverse movement can be moved backwardly.

Such a device is known from U.S. Patent Application SN 525,739. With this known singeing device at both sides of the path along which the carcasses to be treated are moved while they hang burners are positioned in planes parallel to the direction of movement. These burners are subdivided in three separate groups, to wit a group for the head part, a group for the central part and a group for the upper part. The burners of the lower group, destined for the head part, and the burners for the central part and those for the back part of the carcass are vertically movable upwardly and downwardly in a frame in such a manner that in case the group of burners positioned at the one side moves upwardly the opposite group moves backwardly and the other way round and each group only moves within the area for which this is destined.

This has as result that this known device is complicated. Moreover pretty much energy is lost by the fact that the burners require such a space between the carcasses to be treated that these can be moved between the burners.

The aim of the invention is to provide a singeing device that is simple in construction and works more efficiently.

According to the invention this aim is obtained by the fact that the singeing means comprise one or more singeing means which in line with the upwardly and downwardly movement are positioned one above the other, each singeing means is able to form an in essence half circle-shaped singeing front, in such a manner that each singeing means embraces one half of the animal to be treated and all singeing means are guided at the one side as well as on the other side of the path on a column, that is supported in such a manner that it may embody a component of movement with the singeing means in the conveying direction with the same speed as the conveyer means, which columns are coupled to reversing means.

While in the known device the singeing means for the several regions of the carcass during the continuous movement of it have to be rapidly moved upwardly and downwardly with the invention is obtained that with one set of singeing means the whole length of the carcass is treated in a manner that makes it possible to operate the singeing means in the respective regions of the carcass as effective as possible because by displacement in conveying direction with the conveying speed no relative displacement occurs of the carcass with regard to the singeing means. This movement with the conveying speed makes the half circle-shaped singeing front possible which half circle-shaped singeing front can be obtained either by adapted length of the flames of per se parallel to the conveying direction extending beams for burners but also and preferably by using half circle-shaped beams which each embrace the carcass from one side about half of it. Here if desired to the vertical movement a velocity can be given that is adapted to the region to be treated, for instance a slow movement at the place of the head and hind- part and a more rapid movement with regard to the central part that comprises substantially less hairs.

Constructively movement in horizontal as well as vertical direction of the singeing means can be obtained in different manners. So according to the invention it is possible that the singeing means are guided on vertical columns of the frame and this in itself is temporarily coupable to the conveying device and is provided with reversing means. Here the frame thus is provided with means with which this frame temporarily can be coupled with the conveying device, so that the movable frame in this case moves with the same speed as the carcass during which movements the singeing means move upwardly or downwardly and, if desired, with adapted

3

treatens the carcass with adapted intensity. After a complete vertical, that means upward or downward movement of the singeing means uncoupling occurs of the frame from the conveying device by which this is brought back by the reversing means to its initial position in order to be coupled anew to the conveyer device at the arrival of a following carcass during which movement the singeing means fulfill a movement in opposite direction. That means that they move from above to below in case during the foregoing treatment they were moved from below to above. This frame may be movable over the floor, but preferably is suspended to high rails to prevent that it becomes filthy.

According to the invention it also is possible that the singeing means are guided on columns or the like being located in planes parallel to the conveyer path are positioned angularly with regard to the vertical such, that during the upward and downward movement a movement in conveyer direction takes place. The inclined position cares for a displacement in the conveying direction and at the conveying speed. After completing a full tact the singeing means, however, have to be returned completely to the initial position and so they have to cover the same path, that is longer and so asks more time than according to the previous described possibility, in which the frame itself is displaced and returned.

According to another embodiment of the invention it also is possible that columns are swingable about a shaft perpendicular to the conveying direction from a first inclined position to an opposed inclined position and back. This can be a movement about a high positioned shaft, but also about a point of rotation present at the spot of the foot of the columns or a point of rotation that is present between the lower and the upper end of the columns.

The swinging movement can be a periodical movement in which the inclined position of the set of columns is changed again and again in case the singeing has arrived at the end of an upward and/or downward movement but also may be a continuous movement one and the other thing dependent on the dimensions, the speeds of movement, and the mutual distances of the animals.

The principle of the invention according to which the singeing means during the upward and downward movement also move with a com-

ponent that in principle is the same as the speed of movement of the animals can be realized in different manners.

In case singeing means are used on half circle-shaped beams it is necessary that the path of movement extends along the vertical or inclined positioned columns from a point present below the head of the animal to be treated to a point present above the legs with which the animals are suspended, as the beams of the singeing means during the reverse movement are not allowed to come into conflict with the carcass. If the carcass is suspended on a spreading hook gripping the two hind-legs, which hook hangs on the conveying device, then guiding the hook is necessary in such a manner that the carcass is supplied through the device in the correct position.

It is remarked that from French Specification 1,345,668 a singeing means is known with half circle-shaped beams for gas burners. This known singeing device comprises two cross-wise with regard of the conveying device movable carriers that each comprises a number of half circle-shaped beams for burners at a distance above each other. This known device only will function stepwise.

According to the invention it is further possible that the guide means for the singeing devices have a path on the columns that is adapted to the dimensions of the carcass to be treated, in such a manner that the distance of the singeing means to the carcass follows the headline of the carcass.

The invention now will be elucidated with the aid of the drawings.

Figure 1 shows in perspective and schematical a possible embodiment of the device according to the invention.

Figure 2 shows a diagram that indicates the movements of the beams of the singeing means with regard to the time.

Figure 3 schematically shows another embodiment of the device according to the invention.

Figure 4 shows a variant of the embodiment according to Figure 1.

Figure 5 schematically shows a further embodiment of the device according to the invention.

Figure 6 shows still another embodiment of the device according to the invention.

Figure 7 shows a further embodiment of the device according to the invention.

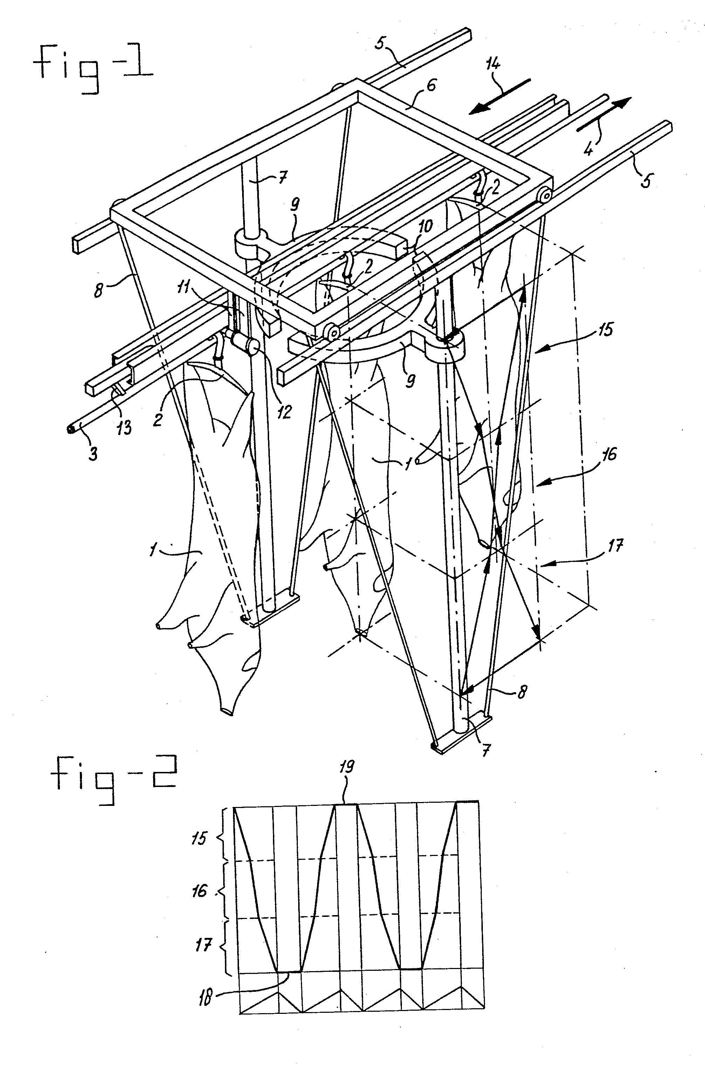

Figure 1 shows a number of carcasses 1 of hogs, that with the hind-legs are connected in a manner known per se to for instance a hook 2, that is suspended on a conveying device 3, that moves in the direction of arrow 4. On rails 5, that are fixedly connected on a level above the conveying device 3 a movable frame 6 is present with downwardly directed columns 7 at both sides of the conveying device and directed vertically downward, that are reinforced by supports such as 8. Around the columns 7 vertically movable and for each column 7 one half circle-shaped beam 9 is present that can be provided with gas burners, not shown. Both beams 9 are in horizontal planes and their ends 10 are at such a distance from each other that the hooks 2 in the shown position are able to move between the ends. With obvious means, that are not shown, the beams 9 can be moved upwardly and downwardly along the columns 7.

The frame 6 comprises at 11 a downwardly directed support for a locking means 12, for instance comprising a compressed air cylinder with the aid of which a pin can be moved in and out of the path of the parts of the conveying device 3, such as for instance the support 13. On the frame further a return spring, that is not shown, may act, the action of which is indicated with the arrow 14.

In case the coupling of the locking device 12 with the conveyer device 3 takes place then the frame 6 with the beams 9 moves with the same speed as the carcasses. In case also a vertical movement takes place then the burners move along the whole length of a carcass during the movement therefrom and in case this whole carcass length is worked the beams with the burners may immediately be returned after the passing of the end of the carcass.

In a known way it is possible to distinguish three working areas in which a difference in intensity of the treatment is desired, to wit an upper part 15, that works on the hind-part with tail and legs, a central part 16 that mostly has less hairs, and a lower or head part 17 that is more difficult to unhair.

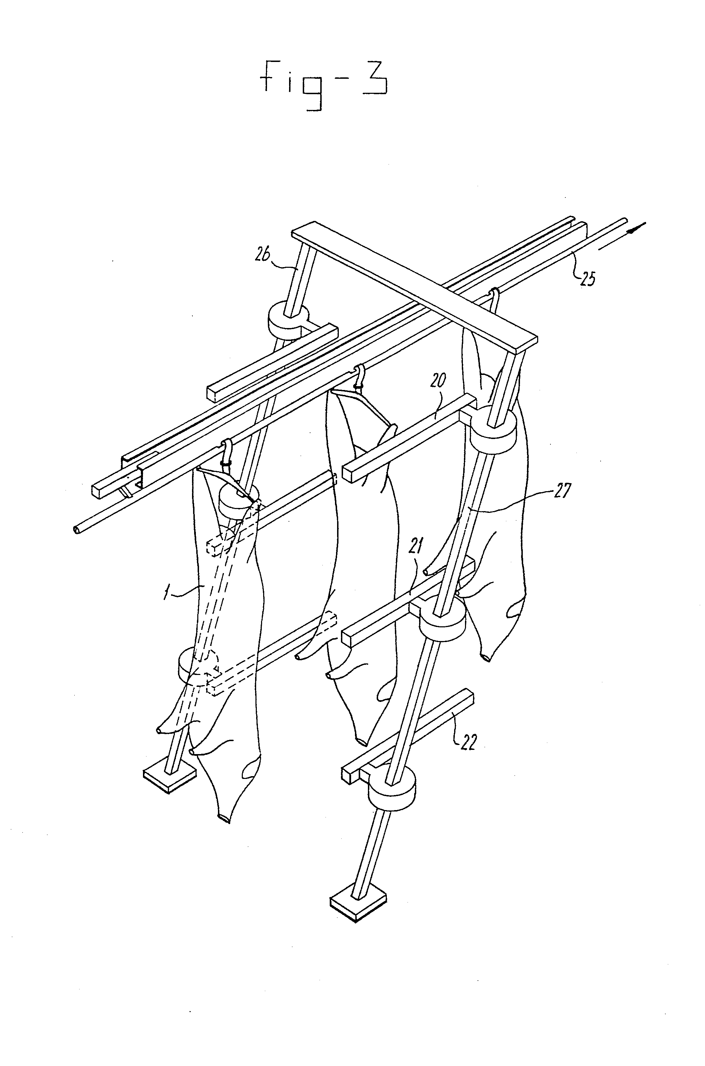

As appears from the diagram of Figure 2 in the upper part 15 a slow movement occurs, in the part 16 a more rapid movement and in the part 17 a slow movement again. The line 18 is related to the return movement and it appears from the time diagram that the next carcass is not worked on from above to below but from below to above, in such a manner that the next return movement, indicated with the line 19, takes place when the beams with the burners have reached the upper position again shown in Figure 1.

The diagram indicates that for a singeing operating for instance a time period of 7 seconds is necessary and for the return movement for instance a time period of 4 seconds.

The diagram of Figure 2 shows in the upper part the vertical movement of the beams 9 with regard to the time indicated along the horizontal axis and shows in the lower part the horizontal movement with regard to time.

Instead of gas burners also infrared burners can be used or other burners such as electric singeing elements.

In all embodiments shown in the drawings the hooks extend with the part connected to the hind-legs of the animals in cross direction to the direction of movement, so that the front-legs point rearwardly. The means necessary therefore are known per se.

By the fact that the conveying device moves continuously the carcasses suspended thereon do not swing and this has the advantage again that the burners or other singeing means can be brought as near as possible to the carcass.

During the upward or downward movement of the singeing means a part of the animal itself, for instance the nose, can be used for switching on the singeing means in a manner as is known per se from the above-mentioned U.S. Patent Application 525,739.

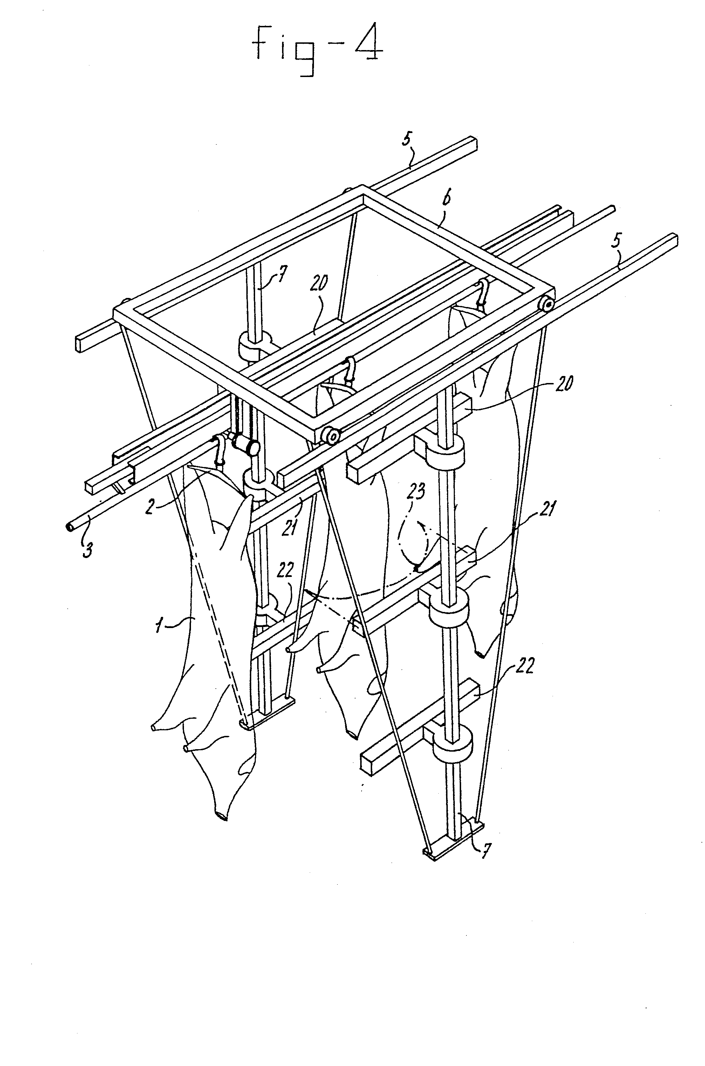

In Figure 1 in essence half circle-shaped beams for burners or other singeing means are shown. Instead of the half circle-shaped embodiment also other shapes are possible, for instance the straight beams 20, 21 and 22, shown in Figure 4, that may have burners embodied in such a manner that the flame front indeed may have the shape of a half circle or half oval, as indicated with 23.

In case the carcass is not surrounded by half circle-shaped or half oval beams for burners, but is shaped by straight beams as shown in Figure 4, then more beams with burners can be positioned

one above each other each with a flame intensity that is tuned to the related part of the carcass. This not only reduces the length of the vertical movement, but also that of the horizontal movement, by which the carcasses can be positioned more near to each other and the production capacity can be increased.

Figure 3 shows an embodiment in which at both sides of the conveying device 25 columns 26 and 27 are present that in conveying direction tilt obliquely forwardly and upwardly with regard to the vertical and along which burners can be moved for instance of the type as shown in Figure 4. A single burner of the type as shown in Figure 1, however, is also possible.

In case of more burners or beams for burners the tact length in horizontal and vertical direction is shorter than in case only one is used what in the embodiment of Figure 3 also means that the angle of inclination of the columns 26, 27 respectively may be smaller. This angle of inclination indeed is related to the speed of movement of the conveying device 25.

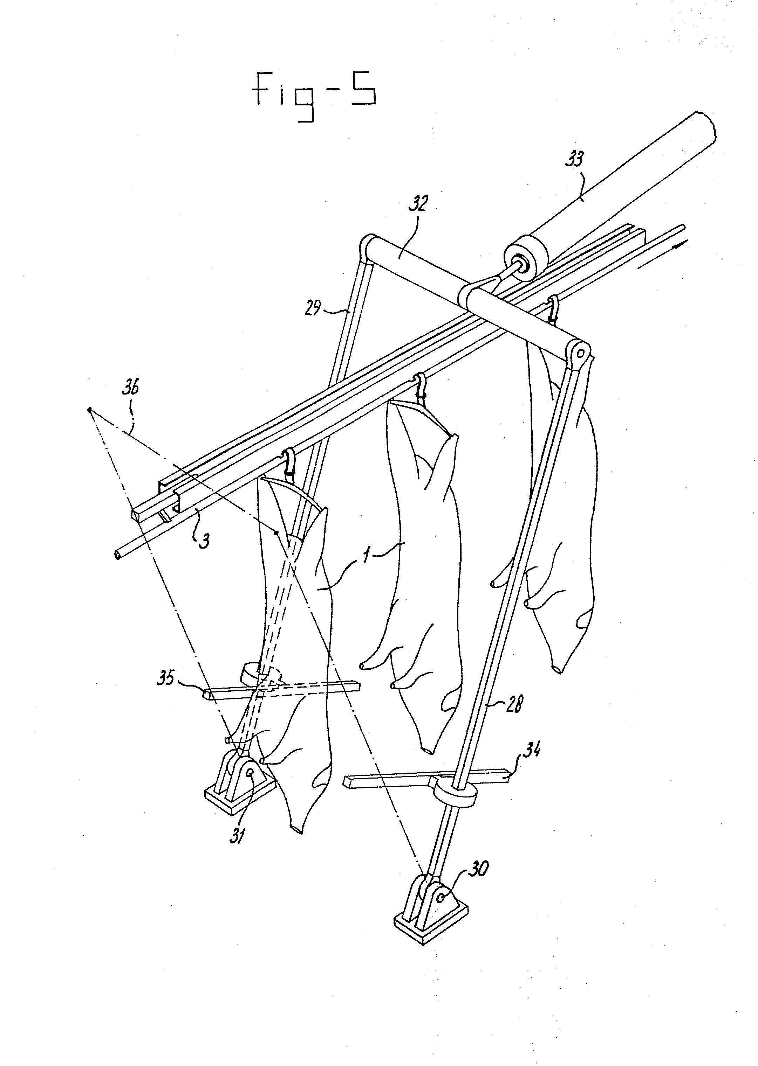

In the embodiment of Figure 5 two columns 28 and 29 are used, of which the lower parts or feet are supported at 30 and 31 rotatable about a cross shaft while on the part 32 connecting the upper ends of the columns 28 and 29 a cylinder 33 acts. On the columns the beams 34 and 35 are guided upwardly and downwardly which beams are provided with burner orifices. These columns 28, 29 can be swung with the aid of the adjusting cylinder 33 into a position that is indicated by dot-and-dash lines 36. In case the frame is in this position 36 with the burners 34, 35 at the spot of the upper end of the columns 28, 29 then the burners follow the carcasses during their upward and downward movement. The frame then is rotated into the position indicated with drawn lines after which the burners are moved from downward to upward for treating a next animal.

It is also possible to swing the columns to and fro with the aid of the device 33, in which for instance one animal is treatened during a downward and upward tact of the singeing means and the next animal when the columns are rotated back in the initial position.

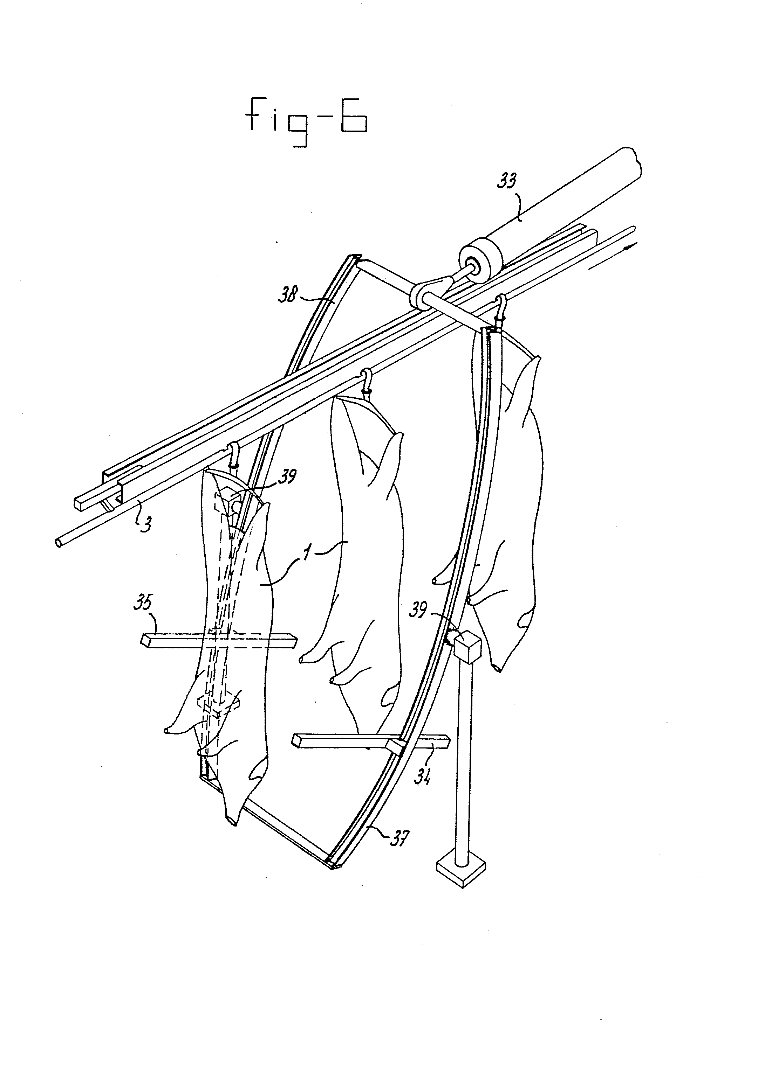

The embodiment shown in Figure 6 differs from that shown in Figure 5 in that the axis of rotation for the columns 37, 38 is about in the middle of the columns at the height of the beams 39 and further that the singeing means 34, 35 are movable along a bent path by shaping the columns as bent profiles on which the singeing means are guided.

In reality the distance to the animals will be smaller than shown in Figure 6 and the middle part of each animal will be the largest while the head and hind-part are smaller. The burners follow this path in general.

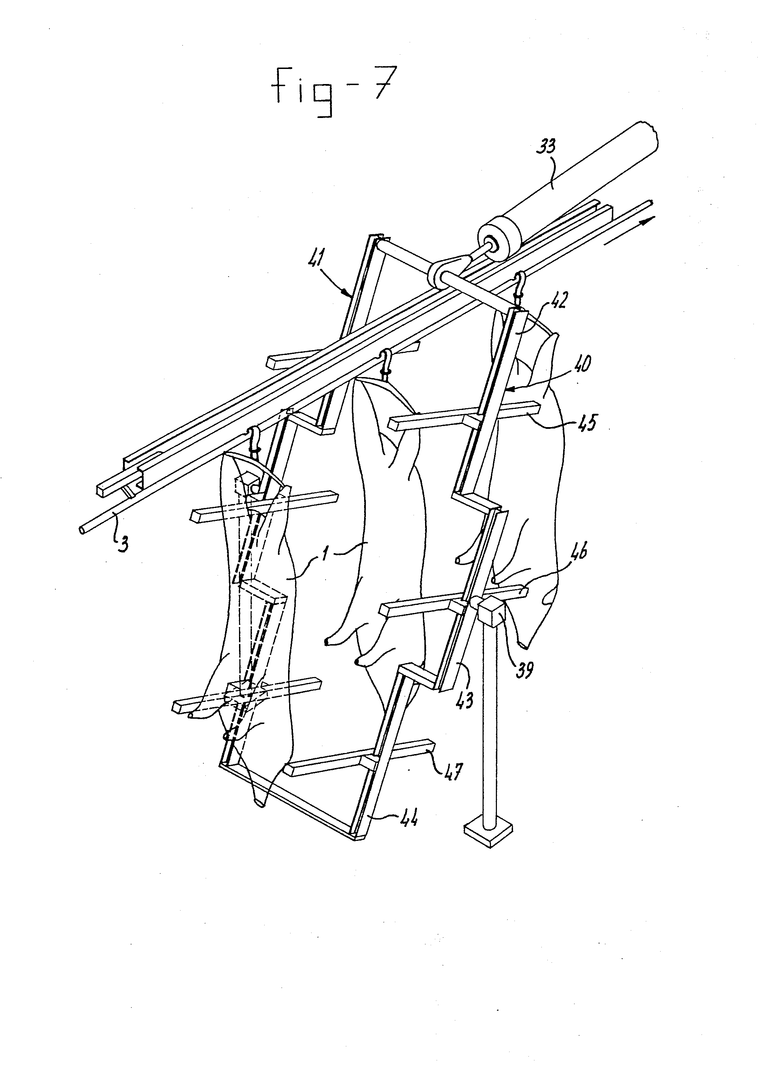

Figure 7 finally shows a variant of the embodiment of Figure 6 in which the columns 40 and 41 comrpise three parts, such as the upper part 42, the middle part 43 and the lower part 44. On each of these parts a beam 45, 46, 47 respectively for singeing means is guided movable and the distance is adapted by jumping of the upper and lower parts 42, 44 respectively with regard to the central part to the dimensions of the carcass.

## C l a i m s

1. Device for removing hairs of slaughtered animals, in particular hogs, with the aid of singeing means, said device comprising a conveyer for continuously moving along a path the slaughtered animals that hang on the hind-legs spaced from each other, means that in the direction of movement of the slaughtered animals can move with the same speed as the conveyer device along a certain distance in conveying direction and back respectively and burners connected to these means, which burners during movement of said first-mentioned means move in the conveying direction in a vertical position along each slaughtered animal in the length direction of it and during the reverse movement can be moved backwardly, c h a r a c t e r i z e d   i n   that the singeing means comprise one or more singeing means which in line with the upwardly and downwardly movement are positioned one above the other, each singeing means is able to form an in essence half circle-shaped singeing front, in such a manner that each singeing means embraces one half of the animal to be treated and all singeing means are guided at the one side as well as on the other side of the path on a column, that is supported in such a manner that it may embody a component of movement with the singeing means in the conveying direction with the same speed as the conveyer means, which columns are coupled to reversing means.

2. Device according to claim 1, c h a r a c t e r i z e d i n  that the singeing means are guided on vertical columns of the frame and this in itself is temporarily coupable to the conveying device and is provided with reversing means.

3. Device according to claim 1, c h a r a c t e r i z e d i n  that the singeing means are guided on columns or the like, being located in planes parallel to the conveying path at an angle with the vertical such that during the upward or downward movement a movement takes place into the conveying direction.

4. Device according to claim 3, c h a r a c t e r i z e d

i n   that the columns are swingable around an axis transversely to the conveying direction from a first inclined position to an opposed inclined position and reverse.

5. Device according to claim 4, c h a r a c t e r i z e d i n   that the columns are coupled with means for periodically adjusting the columns from the one inclined position to the other and reverse, each time at the end of an upward and/or downward movement of the singeing means.

6. Singeing device according to claim 4, c h a r a c t e r i z e d   i n   that the columns are coupled with means for continuously swinging the columns to and fro with the reversing points of the swinging movement essentially synchronous to the reversing movement of the singeing means.

7. Device according to claims 4, 5 or 6, c h a r a c t e r i z e d   i n   that the swinging point is located at the foot of the columns.

8. Device according to claims 4, 5 or 6, c h a r a c t e r i z e d   i n   that the swinging point is located between the lower and upper end of the columns.

9. Device according to one or more of the preceding claims, c h a r a c t e r i z e d   i n   that the singeing means are located upon or in a half circular support and that the path of movement extends from a point below the head of the animals suspended from the conveying device to a point above the legs from which the animals are suspended.

10. Device according to one or more of the preceding claims 2 up to and inclusive 9, c h a r a c t e r i z e d   i n   that the guiding paths for the singeing means on the columns have a path, adapted to the dimensions of the carcass to be treated, such that the distance of the singeing means to the carcass follow the head line of the carcass.

*****
***
*

Fig-1

Fig-2

Fig-3

# Fig-4

# Fig-5

Fig-6

# fig-7

## DOCUMENTS CONSIDERED TO BE RELEVANT

| Category | Citation of document with indication. where appropriate, of relevant passages | Relevant to claim | CLASSIFICATION OF THE APPLICATION (Int. Cl. ³) |
|---|---|---|---|
| Y | BE-A- 533 548 (VANWIJNSBERGHE) <br> * Whole document * | 1 | A 22 B 5/08 |
| A |  | 9 | |
| | --- | | |
| Y | US-A-1 530 022 (VAN DUSEN) <br> * Page 1, lines 31-96; page 3, lines 1-83; page 5, lines 4-105; figures 1-10 * | 1 | |
| A |  | 10 | |
| | ----- | | |

TECHNICAL FIELDS SEARCHED (Int. Cl. ³)

A 22 B

The present search report has been drawn up for all claims

| Place of search <br> THE HAGUE | Date of completion of the search <br> 24-07-1984 | Examiner <br> VILBIG K |
|---|---|---|